# FASCICULE DE BREVET EUROPEEN

(11) **EP 1 350 999 B1**
(45) Date de publication et mention de la délivrance du brevet: **02.08.2006**
(21) Numéro de dépôt: 02007103.1
(22) Date de dépôt: 28.03.2002
(51) Int. Cl.: F16K 31/06, F16K 27/00, F15B 13/00

(54) **Vanne électromagnétique**
Elektromagnetisches Ventil
Electromagnetic valve

(43) Date de publication de la demande: 08.10.2003
(73) Titulaire: FLUID AUTOMATION SYSTEMS S.A., CH-1290 Versoix (CH)
(72) Inventeur: Seuret, Christophe, 1180 Rolle (CH); Gandin, Lionel, 1205 Genève (CH)
(74) Mandataire: KIRKER & Cie S.A.

(56) Documents cités:
- EP-A- 0 939 258
- GB-A- 1 559 836
- JP-A- 60 256 691
- US-A- 4 320 781
- US-A- 5 924 674

## Description

La présente invention concerne les vannes électromagnétiques. Le principe de ces électrovannes est de pouvoir commander par un mécanisme électromagnétique l'application d'une pression sur un endroit précis et/ou le passage d'un fluide ou d'un gaz en ouvrant ou en fermant un orifice qui contrôle la sortie du fluide ou du gaz. Selon l'utilisation des électrovannes, on est intéressé à les miniaturiser.

Les parties principales d'une électrovanne sont normalement un électroaimant, qui est en général composé d'un noyau fixe et d'une bobine, un noyau mobile et une structure porteuse. Nécessité par la manière d'assemblage, les utilisations désirées ou encore d'autres raisons, il se rajoutent à ces trois parties principales généralement de nombreuses parties à destination spécifique.

De plus, dans les électrovannes actuellement connues, ces trois parties sont composées de plusieurs pièces distinctes. Cette contrainte provient principalement des méthodes de fabrication des pièces ferromagnétiques comme l'étampage ou l'usinage traditionnel. Ceci est un inconvénient important en ce qui concerne la miniaturisation des électrovannes dans le sens où une simple diminution de la taille des pièces sans une diminution parallèle du nombre de pièces ne peut pas résoudre beaucoup de problèmes de montage. Ces derniers deviennent souvent insurmontables lorsque la taille des pièces diminue et posent ainsi une limite à la miniaturisation.

La forme cylindrique des électrovannes connues, et surtout la forme cylindrique du noyau mobile des électrovannes conventionnelles, est un autre inconvénient important, comme cette géométrie n'est pas optimale vis-à-vis de la surface de contact entre le noyau fixe et le noyau mobile, on n'optimise donc pas la force magnétique par rapport à la taille de la vanne.

Une électrovanne nécessite aussi des connexions électriques et pneumatiques. Ceci conduit à des inconvénients au niveau de la conception complexe, la fonctionnalité et le montage, surtout dans le cas des connexions intervannes conventionnellement réalisées en reliant les entrées et/ou sorties de pression des électrovannes par une embase pneumatique, nécessitant ainsi une conception compliquée de cette dernière.

Par ailleurs, il est connu dans le domaine des microvannes utilisées principalement pour l'injection de carburant, notamment du document US 5,924,674, une électrovanne ayant un noyau fixe hébergeant une bobine et composant avec celle-ci un électroaimant. Le noyau fixe, constitué d'une seule pièce en un matériau ferromagnétique injecté, sert de circuit magnétique de l'électroaimant et peut incorporer une des connexions pneumatiques de l'électrovanne. La vanne comprend un noyau mobile et un corps placé sur le noyau fixe. Comme typiquement dans ce domaine, le corps et le noyau mobile forment un ensemble qui est composé de plusieurs couches dans lesquelles des structures sont formées par électrodéposition. Cet ensemble multicouche est ensuite fixé sur un plan du noyau fixe qui sert donc d'électroaimant sans autre fonction particulière.

Le but de la présente invention est de remédier aux inconvénients précités et de permettre la réalisation d'une électrovanne composée d'un nombre minimal de pièces en utilisant la technologie d'injection de métaux ferromagnétiques pour la fabrication des pièces complexes multifonctionnelles, de préférence de forme rectangulaire pour optimiser la surface de contact entre le noyau fixe et le noyau mobile de l'électrovanne, la pièce centrale incorporant ainsi au moins une partie des connexions pneumatiques et/ou électriques. Ces avantages contribuent à avancer dans la miniaturisation des électrovannes et à simplifier l'assemblage.

L'objet de la présente invention est une vanne électromagnétique qui se distingue à cet effet par les caractéristiques énoncées à la revendication 1 et/ou les revendications dépendantes.

Les dessins annexés représentent, à titre d'exemple, plusieurs formes d'exécution de l'invention.
Les figures 1a,1b et 1c illustrent schématiquement le principe d'une électrovanne avec un électroaimant à plongeur plat ou avec un électroaimant à plongeur piston, un orifice commun étant intégré dans un noyau fixe ou dans un corps.
Les figures 2a, 2b et 2c présentent des exemples de l'assemblage d'une électrovanne par collage, par agrafage ou par clipsage.
La figure 3 montre un exemple de connexion pneumatique et électrique standardisée et centralisée pour la simplification des connexions intervannes.
Les figures 4a à 4f montrent schématiquement différents types de fixation d'une électrovanne sur une embase pneumatique.
Les figures 5a-c montrent schématiquement plusieurs autres formes d'exécutions d'une électrovanne à trois voies.
Les figures 6a-d représentent schématiquement différentes formes d'exécution d'une électrovanne à deux voies.

L'invention sera maintenant décrite en détail en référence aux dessins annexés qui illustrent à titre d'exemple plusieurs formes d'exécution de l'invention.

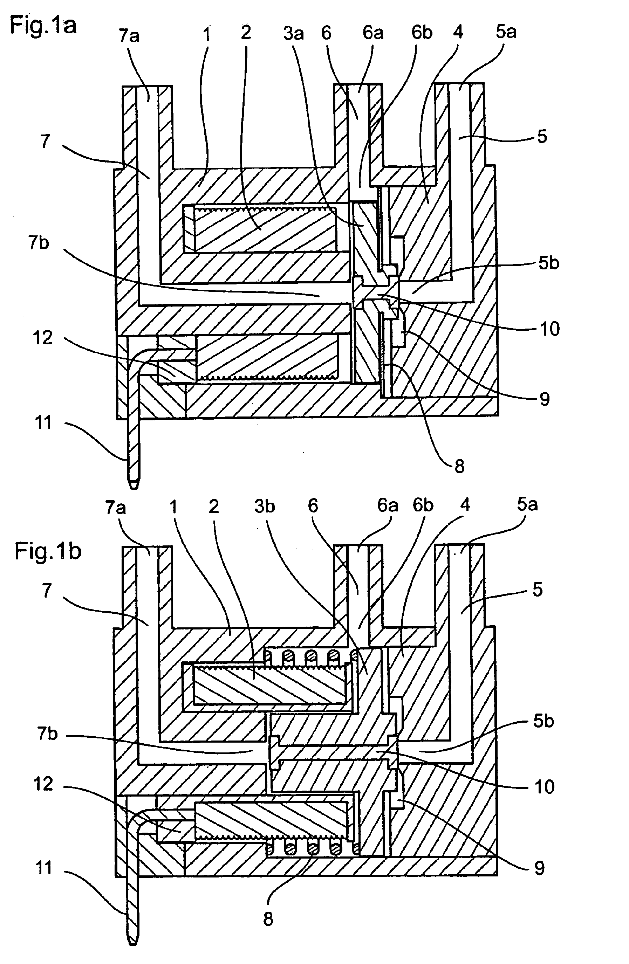

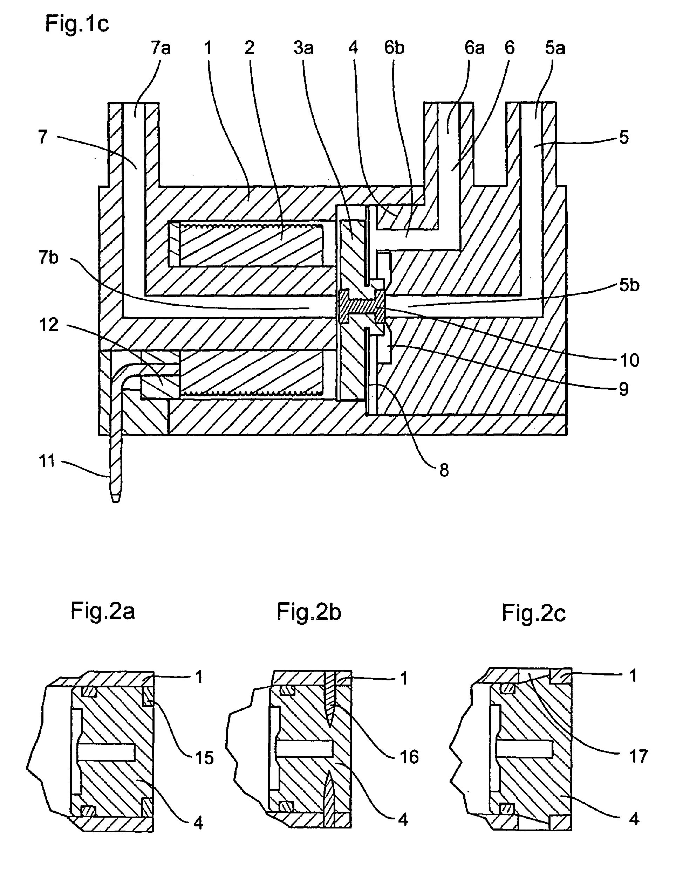

L'électrovanne représentée à la figure 1a est une vanne électromagnétique à trois voies et deux positions qui peut fonctionner en mode trois voies normalement ouvert, en mode trois voies normalement fermé, ou en mode sélecteur ou distributeur, en changeant simplement les positions du raccordement d'arrivée et de sortie de pression.

L'électrovanne comporte trois parties principales, un noyau fixe 1 en une seule pièce hébergeant une bobine 2 dans un logement correspondant, un noyau mobile 3, et un corps 4. Le noyau fixe 1 et le corps 4 composent la structure porteuse et étanche de l'électrovanne, le noyau fixe 1 et la bobine 2 forment ensemble l'électroaimant. Le noyau mobile 3 peut être réalisé comme un plongeur plat 3a, comme représenté aux figures 1a et 1c, ou comme plongeur à piston 3b, comme à la figure 1 b.

Le plongeur est placé concentriquement par rapport à l'axe de l'électrovanne dans une chambre 9 entre le noyau fixe 1 et le corps 4, en face de la bobine 2. Le passage d'entrée 5 de pression et le passage d'échappement 7 se trouvent en partie dans l'axe de la vanne, la partie centrale du plongeur 3 est alors destinée à servir de clapet et à fermer alternativement l'orifice intérieur d'entrée 5b ou l'orifice intérieur d'échappement 7b qui ont la forme d'une buse. Un élastomère 10 est surmoulé à cet effet, soit en une ou deux pièces, au centre du plongeur. De plus, un ressort de rappel 8 est installé dans la chambre 9 entre le noyau fixe 1 et le corps 4. Ce ressort peut être hélicoïdal ou plat et maintient le plongeur dans une première position dans laquelle l'orifice intérieur d'entrée 5b est fermé et l'orifice intérieur d'échappement 7b est ouvert. Lorsque l'électroaimant est sous tension, le plongeur prend, contre l'action de ce ressort, sa deuxième position dans laquelle l'orifice intérieur d'entrée 5b est ouvert et l'orifice intérieur d'échappement 7b est fermé, permettant ainsi d'appliquer une pression sur l'orifice extérieur commun 6a. Quand la tension est enlevée, le ressort de rappel ramène le plongeur 3 dans sa première position permettant au gaz ou au fluide de s'échapper par le passage d'échappement 7 et ainsi d'enlever la pression sur l'orifice extérieur commun 6a. Un échange des raccordements d'arrivée et de sortie de pression permet d'utiliser la vanne dans les modes d'opération appelés "normalement fermé" ou "normalement ouvert". Le raccordement de l'arrivée de pression sur l'orifice extérieur commun 6a permet l'utilisation de l'électrovanne en mode "sélecteur"; le raccordement de deux arrivées de pression sur l'orifice extérieur d'entrée 5a et l'orifice extérieur d'échappement 7a est appelé le mode "distributeur".

Le plongeur 3, le ressort de rappel 8 et leur logement, ainsi que l'électrovanne comme ensemble, peuvent être de forme rectangulaire ou ovale. Cette géométrie augmente la surface de contact entre le plongeur 3 et le noyau fixe 1 de l'électroaimant et donc la force magnétique, permettant ainsi de diminuer la largeur de l'électrovanne. Dans ce cas, un ressort de rappel 8 plat ne doit être retenu que par ses deux extrémités, présentant par conséquent une force de rappel plus faible aussi bien que des contraintes à l'intérieur du ressort plus faibles que dans une construction circulaire.

Le noyau fixe 1 est fabriqué par une technologie d'injection de métaux en une seule pièce et en un matériau ferromagnétique. Cette technique consiste à injecter un mélange de poudre métallique et de liant plastique, puis à désalianter et fritter la pièce obtenue. La pièce est injectée à une échelle surdimensionnée pour qu'au frittage elle récupère ses dimensions normales. Le noyau fixe fabriqué d'une telle façon en une seule pièce permet alors de cumuler plusieurs fonctions.

Premièrement, cette pièce unique assure la fonction de noyau fixe et de circuit magnétique de l'électroaimant, le matériau et le procédé de fabrication assurant ses caractéristiques magnétiques. Elle présente une gorge annulaire hébergeant la bobine 2.

Deuxièmement, cette pièce est conçue afin d'aménager les passages de la connexion pneumatique et électrique de l'électrovanne. Elle peut donc, comme représenté à la figure 1a ou 1b, comporter un passage d'échappement 7 de pression avec l'orifice extérieur d'échappement 7a et l'orifice intérieur d'échappement 7b ainsi qu'un passage commun 6 avec l'orifice extérieur commun 6a et l'orifice intérieur commun 6b. Ou elle peut, comme à la figure 1c, comporter seulement le passage d'échappement 7 avec les orifices correspondants. Le corps 4 normalement fabriqué en plastique comporte dans ces cas soit seulement un passage d'entrée 5 de pression avec l'orifice extérieur d'entrée 5a et l'orifice intérieur d'entrée 5b, soit le passage d'entrée 5 et le passage commun 6 avec les orifices correspondants. L'orifice intérieur d'entrée 5b présente une buse en face du centre d'un noyau mobile 3, l'orifice intérieur d'échappement 7b présente une buse en face du centre de l'autre côté du noyau mobile 3.

Il est également possible que cette pièce unique ne comporte que des passages à l'intérieur sans les parties saillantes montrées dans les figures 1a-c, ou que les parties saillantes des passages soient réalisées par des pièces séparées destinée à être intégrée par des orifices correspondants et prévus à cet effet dans le noyau fixe.

En général, la conception de l'électrovanne permet plusieurs plans de pose pneumatiques différents. Les orifices extérieurs peuvent se trouver en ligne ou sur n'importe quelle face de la vanne; il est notamment possible que l'orifice extérieur d'échappement 7a se situe perpendiculairement ou parallèlement à l'axe de la vanne, que les trois orifices extérieurs 5a, 6a, 7a soient situés dans le même plan, ou encore que l'orifice extérieur d'échappement 7a et l'orifice extérieur d'entrée 5a se situent dans le même plan, l'orifice extérieur commun 6a étant perpendiculaire à ce plan. Ceci peut être accompagné d'un agencement correspondant du passage pour la connexion électrique, comme l'intégration d'une connexion électrique centralisée 14 dans le même plan, décrit en détail plus loins dans ce document.

La technique d'injection de métaux ferromagnétiques permet surtout de fabriquer le noyau fixe 1 en une pièce unique, intégrant même des orifices saillants (7a,6a), comme illustré schématiquement aux figures 1a, 1b et 1c, ou simplement alignés avec la surface extérieure de l'électrovanne, une gorge annulaire comme logement recevant la bobine, et d'autres caractéristiques décrites ci-dessous.

Troisièmement, cette pièce unique du noyau fixe 1 est agencée de façon à permettre l'assemblage final de l'électrovanne entre le noyau fixe 1 et le corps 4. A cet effet, la pièce présente une forme géométrique permettant soit le collage, par exemple en utilisant un joint de résine 15 placé dans une rainure du corps 4 et adhérant chimiquement avec le métal du noyau fixe 1, soit le passage de goupilles ou agrafes 16, ou bien la fixation par des clips 17, ce qui est illustré aux figures 2a-2c.

Quatrièmement, cette pièce unique, ainsi que le corps 4, peut présenter des ergots 13, des supports ou des orifices adaptés à assurer la fixation intervanne ou la fixation de l'électrovanne sur une embase pneumatique 20.

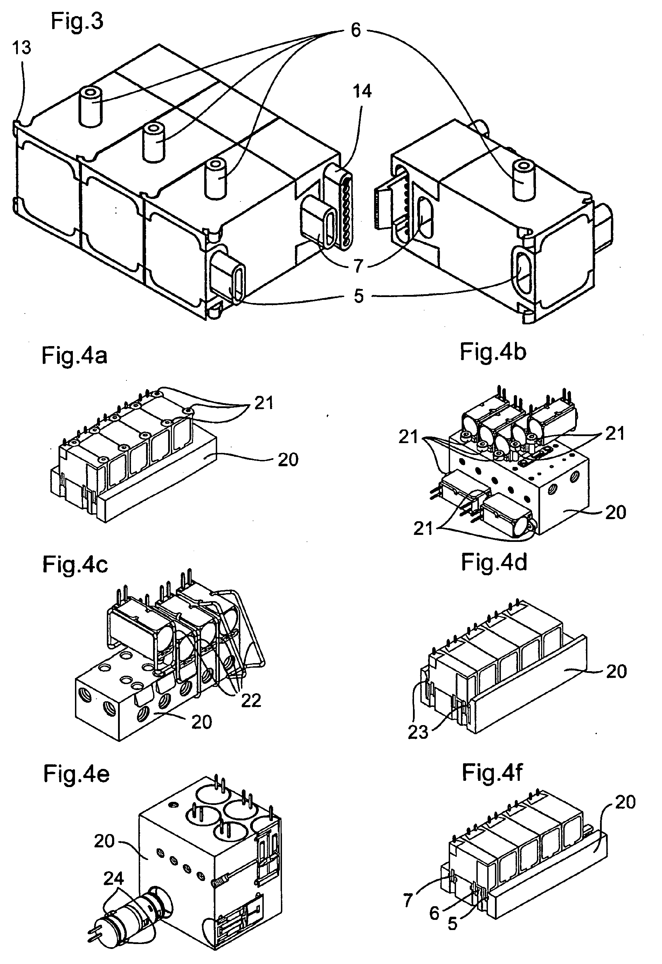

Comme mentionné ci-dessus, les orifices d'entrée et d'échappement de pression peuvent être arrangés différemment. Il est donc possible, et illustré à la figure 3, de réaliser une connexion pneumatique et électrique permettant de relier directement entre les électrovannes les entrées et/ou sorties de pression. Ceci est possible si le passage d'entrée 5 et le passage d'échappement 7 de pression comportent chacun deux orifices extérieurs standardisés sur deux côtés opposés de l'électrovanne, et en positionnant ces orifices extérieurs d'entrée 5a et ces orifices extérieurs d'échappement 7a ainsi que, éventuellement, la connexion électrique centralisée 14 dans un plan, et l'orifice extérieur commun perpendiculaire à celui-ci. L'assemblage de plusieurs vannes génère alors la connexion pneumatique et électrique complète de l'ensemble. Cet arrangement permet notamment la simplification de la connexion électrique d'un groupe d'électrovannes interconnectées dans le sens où les connecteurs 14 sont standardisés, intégrés dans le corps 4 en le traversant parallèlement aux orifices pneumatiques destinés à l'interconnexion, et commandés à partir d'une électrovanne qui héberge centralement les connexions électriques extérieures.

Un tel arrangement simplifie aussi la fixation sur une embase pneumatique 20 en supprimant, si tel est désiré, la nécessité que l'embase assure la fonction de connexion pneumatique et/ou électrique. Pour ces cas, une forme rectangulaire des vannes est particulièrement intéressante au point de vue mécanique pour l'assemblage des vannes. Comme montré schématiquement aux figures 4a à 4f, la fixation sur une embase est entre autres possible par les différents types de fixation illustrés, soit la fixation en utilisant des vis 21 (figures 4a et 4b), des clips 22 (figure 4c), des rails 23 (figure 4d), un système en baïonnette 24, ce qui est évidemment intéressant pour les vannes de forme cylindrique comme le montre figure 4e, ou encore en utilisant les embouts pneumatiques (figure 4f). Le fait de disposer pour l'agencement du noyau fixe de formes géométriques complexes et adaptées à assurer la fixation intervanne ou sur un embase tout en n'ayant qu'une seule pièce pour le noyau fixe est donc particulièrement avantageux.

La connexion électrique du solénoïde exposé dans ce document couvre plusieurs systèmes. Dans une forme d'exécution de la connexion électrique, deux picots 11 plantés au-dessus de l'âme 12 de la bobine 2, sur lesquels les fils de la bobine sont fixés et qui traversent le noyau fixe 1 par un orifice bouché de manière étanche après leur installation, sont utilisés directement comme connecteurs externes. Ces picots 11 peuvent être droits ou recourbés après l'introduction de la bobine 2 dans son logement. Les picots peuvent également servir comme fiches mâles d'un connecteur ou peuvent être soudés sur une plaque électronique extérieure.

La description et les dessins présentés ci-dessus décrivant une électrovanne à trois voies et deux positions ne sont bien entendu pas limitatifs en ce qui concerne d'autres exécutions d'une électrovanne selon la présente invention. Il existe plusieurs autres formes d'exécution d'une électrovanne conformes aux caractéristiques protégées dans le présent document, qui seront décrites dans la suite de celui-ci.

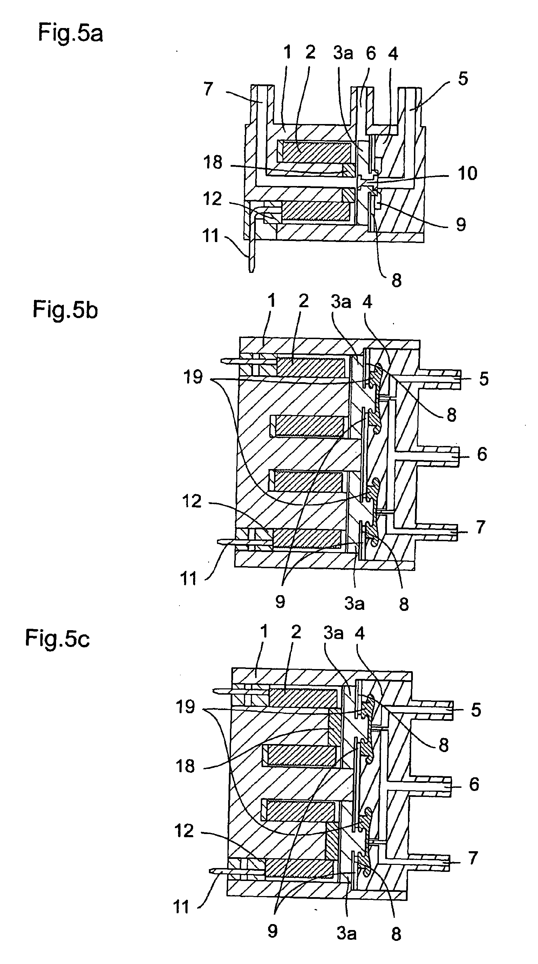

Premièrement, en ce qui concerne les vannes à trois voies et deux positions, la figure 5a montre une exécution d'une électrovanne qui comporte encore un aimant permanent 18 en forme d'anneau placé concentriquement à l'axe de la vanne dans la partie centrale du noyau fixe 1. En fonction des caractéristiques magnétiques du matériau ferromagnétique utilisé pour la fabrication du noyau fixe 1, cet aimant permanent 18 sert à augmenter la force magnétique générée par le noyau fixe après avoir été magnétisé.

Deuxièmement, la figure 5b montre une vanne électromagnétique avec un plan de pose pneumatique différent. Dans ce cas, la pièce unique du noyau fixe 1 sert de circuit magnétique, de logement de la bobine 2, de passages pour la connexion électrique, et de fixation pour l'assemblage de la vanne et pour la connexion intervanne comme mentionné ci-dessus, mais les passages pneumatiques sont exclusivement intégrés dans le corps 4. Ceci permet de placer les orifices extérieurs (5a, 6a, 7a) de tous les passages pneumatiques par exemple de façon parallèle à l'axe de la vanne sur le côté ouvert et orienté à l'extérieur du corps 4. Le noyau fixe 1 est dans ce cas équipé de deux bobines 2 hébergées dans deux gorges annulaires. Deux noyaux mobiles 3 correspondants sont placés de façon analogue à ce qui a été décrit ci-dessus dans deux chambres 9 entre le noyau fixe 1 et le corps 4 afin de fermer ou d'ouvrir indépendamment les orifices intérieurs 5b et 7b du passage d'entrée 5 de pression et du passage d'échappement 7 de pression qui se trouvent en face des noyaux mobiles ainsi que simultanément un des deux orifices intérieurs communs 6b débouchant à coté des orifices 5b ou 7b. Contrairement au cas de la figure 5a où l'orifice intérieur d'échappement 7b présente, par rapport à l'orifice intérieur d'entrée 5b, une buse en face de l'autre côté du noyau mobile 3, l'orifice intérieur d'échappement 7b présente dans le cas de la figure 5b une buse du même coté, mais en face du deuxième noyau mobile 3. Une membrane de séparation 19 déformable est intégrée dans les noyaux mobiles 3 et également fixée au corps 4 pour empêcher l'entrée du fluide ou du gaz dans la partie de la vanne sur le côté de la membrane orienté vers les noyaux mobiles 3. Une telle conception permet une séparation spatiale des fonctions pneumatiques et électromagnétiques de la vanne. Un autre exemple non représenté dans lequel tous les passages pneumatiques sont intégrés dans le corps 4 est d'orienter les orifices extérieurs au moins en partie perpendiculairement à l'axe de la vanne, par exemple en prolongeant le corps 4 à cet effet au-delà de sa partie destinée à être logée dans le noyau fixe 1, et, si besoin est, de faire traverser ces passages entièrement le corps 4. Ainsi, on facilite entre autre une connexion intervanne pour ce type de pose des passages pneumatiques uniquement dans le corps 4.

Troisièmement, il est évidemment possible d'intégrer, comme illustré à la figure 5c, deux aimants permanents 18, qui ont ici la forme d'un disque, de façon correspondante à ce qui a été décrit ci-dessus dans le noyau fixe 1 d'une électrovanne avec trois voies situées du côté ouvert du corps 4.

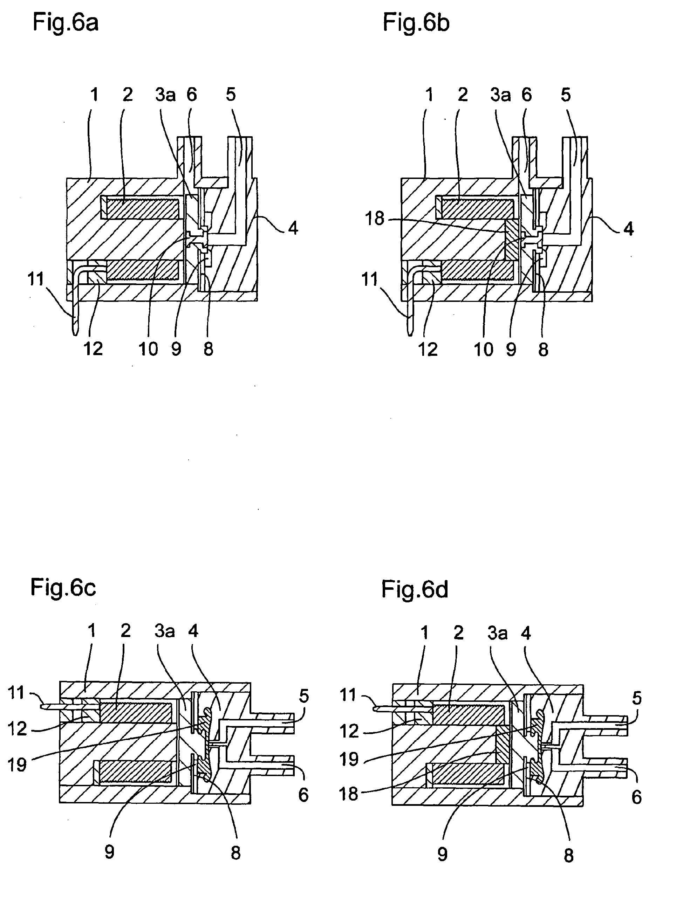

Les caractéristiques de l'invention ne sont pas limitées aux vannes électromagnétiques à trois voies, mais peuvent être appliquées dans d'autres vannes similaires. Il est notamment possible de transposer les formes d'exécution décrites ci-dessus aux électrovannes à deux voies. Ceci sera expliqué en détail par la suite à l'aide des figures 6a-d, qui correspondent aux figures 1a et 5a-c pour les vannes à trois voies.

La figure 6a montre donc une électrovanne à deux voies et deux positions comportant un passage d'entrée 5 de pression intégré dans le corps et un passage commun 6 qui sert ici de passage d'échappement de pression. Les fonctions, les parties et la conception de la vanne sont analogues à ce qui a été expliqué lors de la description des figures 1a-c, hormis le fait que le noyau fixe 1 ne comporte pas de troisième passage pneumatique. Le noyau mobile 3 permet alors d'ouvrir ou fermer l'orifice intérieur d'entrée 5b permettant ou non le passage d'un fluide ou d'un gaz pour s'échapper par le passage commun 6. Ce principe de la disposition des passages pneumatiques peut également être réalisé par un schéma non représenté avec deux passages disposés axialement dans la vanne au lieu de la version de la figure 6a où les orifices extérieurs 5a, 6a et surtout le passage commun 6 sont disposés perpendiculairement à l'axe de la vanne au lieu d'être parallèle à cette axe. Ceci est également applicable d'une manière analogue aux vannes à trois voies dont au moins deux peuvent être placées axialement ou parallèlement à l'axe de la vanne. D'autres possibilités de disposition et d'orientation des passages pneumatiques sont encore imaginable afin d'optimiser la géométrie de la vanne pour certaines applications, pour la connexion intervanne ou la fixation sur une embase et ne seront pas énumérés ici sans pour autant limiter la portée de la présente invention.

Bien entendu et comme illustré à la figure 6b, ce type d'électrovanne peut être équipée d'un aimant permanent 18 en forme de disque placé concentriquement à l'axe de la vanne dans la partie centrale du noyau fixe 1.

La forme d'exécution avec un plan de pose pneumatique de manière à ce que tous les orifices pneumatiques soient placés sur le côté ouvert du corps 4 est également possible et montrée schématiquement à la figure 6c pour les vannes à deux voies. Un telle vanne comporte une membrane de séparation 19 déformable et fixée entre le noyau mobile 3 et le corps 4 afin de constituer une séparation étanche entre le noyau fixe 1 hébergeant l'électroaimant et le corps 4 hébergeant le système pneumatique.

Evidemment cette forme d'exécution d'une électrovanne peut être modifiée, comme illustré à la figure 6d, en mettant un aimant permanent 18 dans la partie centrale du noyau fixe.

Bien entendu, les commentaires et explications relatifs aux vannes à trois voies concernant la forme de la vanne comme ensemble, de la disposition des passages pneumatiques, du plongeur, du ressort de rappel ou de leur logement, qui peut être rectangulaire ou ovale, sont également valables pour les vannes à deux voies et vice versa. Ainsi, les caractéristiques de la pièce unique du noyau fixe 1 concernant l'assemblage final de la vanne entre le noyau fixe 1 et le corps 4, concernant la fixation intervanne et/ou la fixation sur une embase, ainsi que concernant la connexion électrique, sont transposables de manière correspondante.

Cette présentation de différentes formes d'exécution d'une vanne électromagnétique selon l'invention n'est pas exhaustive et complète. On peut évidemment réaliser le noyau mobile 3 comme plongeur piston au lieu d'un plongeur plat 3a comme illustré aux figures 5a-c et 6a-d, faire, dans le cas où les vannes sont de forme cylindrique, leur connexion mécanique par un système conventionnel, par exemple cartouche ou auto-taraudante, ou imaginer encore d'autres modifications conventionnelles et compatibles avec l'invention présentée sans pour autant limiter la portée de la présente invention.

## Revendications

1. Electrovanne comportant un noyau fixe (1) hébergeant au moins une bobine (2) dans au moins un logement et composant avec celle-ci au moins un électroaimant de l'électrovanne, un corps (4) composant avec le noyau fixe (1) la structure porteuse de l'électrovanne, et au moins un noyau mobile (3) placé entre le noyau fixe (1) et le corps (4) et déplaçable entre deux positions de service; le noyau fixe (1) étant constitué d'une seule pièce en un matériau ferromagnétique injecté, constituant le circuit magnétique des ou de l'électroaimant(s), incorporant au moins une des connexions pneumatiques et/ou électriques de l'électrovanne; **caractérisée par le fait que** la pièce unique du noyau fixe (1) est agencée de façon à permettre l'assemblage final de l'électrovanne entre le noyau fixe (1) et le corps (4) en présentant une forme géométrique permettant la fixation de ces deux pièces et permettant de loger, au moins partiellement, le corps (4) dans le noyau fixe (1), le ou les noyaux mobiles (3) étant réalisés comme plongeur plat (3a) ou comme plongeur à piston (3b).

2. Electrovanne selon la revendication 1, **caractérisée par le fait que** le (ou les) noyau(x) mobile(s) (3) et son (leur) logement(s), qui est (sont) constitué(s) par une (ou des) chambre(s) (9) entre le noyau fixe (1) et le corps (4) en face de la (ou des) bobines (2), et/ou toute l'électrovanne sont de forme rectangulaire ou ovale, permettant d'augmenter la surface de contact entre le (ou les) noyau(x) mobile(s) (3) et le noyau fixe (1) des ou de l'électroaimant(s) et donc d'optimiser la force magnétique.

3. Electrovanne selon la revendication 1 ou 2, **caractérisée par le fait qu'**elle comporte un passage d'entrée (5) de pression avec un orifice extérieur d'entrée (5a) et un orifice intérieur d'entrée (5b), ce passage étant intégré dans le corps (4), et un passage commun (6) avec un orifice extérieur commun (6a) et au moins un orifice intérieur commun (6b), ce passage étant intégré soit dans la pièce unique du noyau fixe (1) soit dans le corps (4) de façon à pouvoir communiquer avec les autres passages pneumatiques soit directement, soit indirectement par la (ou les) chambre(s) (9) entre le noyau fixe (1) et le corps (4).

4. Electrovanne selon la revendication 3, **caractérisée par le fait qu'**elle comporte un passage d'échappement (7) de pression avec un orifice extérieur d'échappement (7a) et un orifice intérieur d'échappement (7b), ce passage étant intégré soit dans la pièce unique du noyau fixe (1), soit dans le corps (4).

5. Electrovanne selon la revendication précédente, **caractérisée par le fait que** l'orifice extérieur d' échappement (7a) du passage d'échappement (7) de pression est situé perpendiculairement ou parallèlement à l'axe de l'électrovanne.

6. Electrovanne selon l'une des revendications 3 à 5, **caractérisée par le fait que** tous les orifices extérieurs (5a, 6a, 7a) sont situés dans le même plan, ou que tous les orifices extérieurs sont situés dans le même plan sauf l'orifice extérieur commun (6a) qui est orienté perpendiculairement à ce plan.

7. Electrovanne selon l'une des revendications 3 à 4, **caractérisée par le fait que** tous les orifices extérieurs (5a, 6a, 7a) sont parallèles à l'axe de la vanne et sont placés sur le côté ouvert et orienté à l'extérieur du corps (4).

8. Electrovanne selon l'une des revendications précédentes, **caractérisée par le fait qu'**au moins un des orifices extérieurs (5a, 6a, 7a) est réalisé de manière à former un passage saillant hors de la vanne.

9. Electrovanne selon l'une des revendications précédentes, **caractérisée par le fait qu'**elle comporte au moins un aimant permanent (18), en forme de disque ou d'anneau, placé concentriquement ou parallèlement à l'axe de la vanne dans la partie centrale du noyau fixe (1) entouré d'une bobine (2).

10. Electrovanne selon l'une des revendications précédentes, **caractérisée par le fait que** la fixation du noyau fixe (1) au corps (4) est réalisée par collage, par des goupilles ou agrafes (16) traversant le corps (4) et la pièce du noyau fixe, ou par des clips (17).

11. Electrovanne selon l'une des revendications 3 à 6 ou 8 à 10, **caractérisée par le fait que** le passage d'entrée (5) et le passage d'échappement (7) de pression sont agencés de manière à ce qu'une connexion pneumatique intervanne soit possible, du fait que chacun des deux passages comporte deux orifices extérieurs standardisés sur deux côtés opposés de l'électrovanne.

12. Electrovanne selon la revendication précédente, **caractérisée par le fait que** la connexion électrique d'un groupe d'électrovannes interconnectées est standardisée et intégrée dans le corps (4) par un connecteur (14) standardisé traversant ce corps, permettant ainsi de centraliser la commande électrique de tout un groupe d'électrovannes sur une seule électrovanne.

13. Electrovanne selon l'une des revendications précédentes, **caractérisée par le fait que** la pièce unique du noyau fixe (1) et/ou le corps (4) présentent des ergots (13), des supports ou des orifices adaptés à assurer la fixation intervanne et/ou la fixation de l'électrovanne sur une embase pneumatique (20).

14. Electrovanne selon la revendication précédente, **caractérisée par le fait que** la fixation intervanne et/ou la fixation sur une embase pneumatique (20) est réalisée en utilisant des vis (21), des clips (22), des rails (23), des systèmes en baïonnette (24) ou les embouts pneumatiques de l'électrovanne.

## Claims

1. Magnetic valve comprising a fixed core (1) housing at least one coil (2) in at least one recess which together form at least one electromagnet of the magnetic valve, a body (4) which together with the fixed core (1) constitutes the supporting structure of the magnetic valve, and at least one mobile core (3) placed between the fixed core (1) and the body (4) and able to move between two working positions; the fixed core (1) consisting of a single piece of an injected ferromagnetic material constituting the magnetic circuit of the electromagnet(s) and incorporating at least one of the pneumatic and/or electrical connections of the magnetic valve; **characterised in that** the single piece of the fixed core (1) is arranged so as to admit final assembly of the magnetic valve between the fixed core (1) and the body (4), by offering a geometric shape allowing these two parts to be fixed, and allowing the body (4) to be housed at least in part within the fixed core (1), the mobile core(s) (3) being realised as a flat piston (3a) or as a plunger piston (3b).

2. Magnetic valve of claim 1, **characterised in that** the mobile core(s) (3) and its (their) recess(es) that consist(s) of a chamber (or chambers) (9) between the fixed core (1) and the body (4) facing the coil(s) (2), and/or the entire magnetic valve have a rectangular or oval shape that allows the contact surface between the mobile core(s) (3) and the fixed core (1) of the electromagnet(s) to be increased, and thus the magnetic force to be optimised.

3. Magnetic valve of claim 1 or 2, **characterised in that** it comprises a pressure entrance channel (5) with an external entrance opening (5a) and an internal entrance opening (5b) which channel is integrated into the body (4), as well as a common channel (6) with an external common opening (6a) and at least one internal common opening (6b) which channel is integrated, either into the single piece of the fixed core (1) or into the body (4), so as to be able to communicate with the other pneumatic channels either directly or indirectly via the chamber(s) (9) between the fixed core (1) and the body (4).

4. Magnetic valve of claim 3, **characterised in that** it comprises a pressure relief channel (7) with an external relief opening (7a) and an internal relief opening (7b) which channel is integrated, either into the single piece of the fixed core (1) or into the body (4).

5. Magnetic valve according to the preceding claim, **characterised in that** the external relief opening (7a) of the pressure relief channel (7) is situated perpendicular or parallel to the axis of the magnetic valve.

6. Magnetic valve according to one of claims 3 to 5, **characterised in that** all the external openings (5a, 6a, 7a) are situated in the same plane, or **in that** all external openings are situated in the same plane, except for the common external opening (6a) that is oriented perpendicularly to this plane.

7. Magnetic valve according to one of claims 3 to 4, **characterised in that** all external openings (5a, 6a, 7a) are parallel to the axis of the valve, and are placed on the open side of the body (4) with an outward orientation from it.

8. Magnetic valve according to one of the preceding claims, **characterised in that** at least one of the external openings (5a, 6a, 7a) is realised in such a way that it forms a channel protruding from the valve.

9. Magnetic valve according to one of the preceding claims, **characterised in that** it comprises at least one permanent magnet (18) in the shape of a disc or ring placed concentrically or parallel to the axis of the valve in the central part of the fixed core (1) surrounded by a coil (2).

10. Magnetic valve according to one of the preceding claims, **characterised in that** the fastening of the fixed core (1) to the body (4) is realised by gluing, by pins or clasps (16) traversing the body (4) and the piece of the fixed core, or by clips (17).

11. Magnetic valve according to one of claims 3 to 6 or 8 to 10, **characterised in that** the entrance channel (5) and the pressure relief channel (7) are arranged so that a pneumatic connection between valves is possible, inasmuch as each of the two channels comprises two standardised external openings on two opposite sides of the magnetic valve.

12. Magnetic valve according to the preceding claim, **characterised in that** the electrical connection of a group of interconnected magnetic valves is standardised and integrated into the body (4) by a connector (14) traversing this body, thus allowing the electrical control of an entire group of magnetic valves to be concentrated in a single magnetic valve.

13. Magnetic valve according to one of the preceding claims, **characterised in that** the single piece of the fixed core (1) and/or the body (4) exhibit projections (13), supports or openings apt to secure the mutual fastening of valves and/or the fastening of the magnetic valve on a pneumatic subbase (20).

14. Magnetic valve according to the preceding claim, **characterised in that** the mutual fastening of valves and/or the fastening on a pneumatic subbase (20) is realised by screws (21), clips (22), rails (23), bayonet systems (24), or the pneumatic fittings of the magnetic valve.

## Patentansprüche

1. Magnetventil mit einem feststehenden Kern (1), zumindest eine Spule (2) in zumindest einer Aussparung haltend und zusammen mit ihr zumindest einen Elektromagneten des Magnetventils bildend, mit einem Körper (4), der zusammen mit dem feststehenden Kern (1) die tragende Struktur des Magnetventils bildet, und mit zumindest einem beweglichen Kern (3), der zwischen dem feststehenden Kern (1) und dem Körper (4) platziert ist und zwischen zwei Arbeitsstellungen bewegt werden kann; wobei der feststehende Kern (1) aus einem einzigen Teil aus einem ferromagnetischen Spritzgussmaterial besteht, das den magnetischen Kreis des oder der Elektromagneten darstellt, und zumindest einen der pneumatischen und/oder elektrischen Anschlüsse des Magnetventils enthält; **dadurch gekennzeichnet, dass** das einzige Teil des feststehenden Kerns (1) so eingerichtet ist, dass es die Endmontage des Magnetventils zwischen dem feststehenden Kern (1) und dem Körper (4) ermöglicht, indem es eine geometrische Form aufweist, die die Befestigung dieser beiden Teile gestattet und es erlaubt, den Körper (4) zumindest teilweise im feststehenden Kern (1) unterzubringen, wobei der oder die bewegliche(n) Kern(e) (3) als ein Flachkolben (3a) oder ein Tauchkolben (3b) realisiert ist (sind).

2. Magnetventil nach Anspruch 1, **dadurch gekennzeichnet, dass** der (oder die) bewegliche(n) Kern(e) (3) und seine (ihre) Unterbringung(en), die aus einer der (oder den) Spule(n) (2) zugewandten Kammer(n) (9) zwischen dem feststehenden Kern (1) und dem Körper (4) besteht (bestehen), und/oder das gesamte Magnetventil eine rechteckige oder ovale Gestalt besitzen, die es erlaubt, die Berührungsfläche zwischen dem (den) beweglichen Kern(en) (3) und dem feststehenden Kern (1) des oder der Elektromagneten zu vergrössern und somit die magnetische Kraft zu optimieren.

3. Magnetventil nach Anspruch 1 oder 2, **dadurch gekennzeichnet, dass** es einen Druckeintrittskanal (5) mit einer äusseren Eintrittsöffnung (5a) und einer inneren Eintrittsöffnung (5b), der in den Körper (4) integriert ist, sowie einen Sammelkanal (6) mit einer äusseren Sammelöffnung (6a) und zumindest einer inneren Sammelöffnung (6b) umfasst, der so entweder in das einzige Teil des feststehenden Kerns (1) oder in den Körper (4) integriert ist, dass er entweder direkt oder indirekt über die Kammer(n) (9) zwischen dem feststehenden Kern (1) und dem Körper (4) mit den anderen pneumatischen Kanälen kommunizieren kann.

4. Magnetventil nach Anspruch 3, **dadurch gekennzeichnet, dass** es einen Druckablasskanal (7) mit einer äusseren Ablassöffnung (7a) und einer inneren Ablassöffnung (7b) umfasst, der entweder in das einzige Teil des feststehenden Kerns (1) oder in den Körper (4) integriert ist.

5. Magnetventil nach dem vorangehenden Anspruch, **dadurch gekennzeichnet, dass** die äussere Ablassöffnung (7a) des Druckablasskanals (7) senkrecht oder parallel zur Achse des Magnetventils angebracht ist.

6. Magnetventil nach einem der Ansprüche 3 bis 5, **dadurch gekennzeichnet, dass** alle äusseren Öffnungen (5a, 6a, 7a) in der gleichen Ebene liegen oder dass alle äusseren Öffnungen in der gleichen Ebene liegen, mit Ausnahme der äusseren Sammelöffnung (6a), die zu dieser Ebene senkrecht ausgerichtet ist.

7. Magnetventil nach einem der Ansprüche 3 bis 4, **dadurch gekennzeichnet, dass** alle äusseren Öffnungen (5a, 6a, 7a) parallel zur Achse des Ventils verlaufen und an der offenen Seite des Körpers (4) platziert und von diesem nach aussen gerichtet sind.

8. Magnetventil nach einem der vorangehenden Ansprüche, **dadurch gekennzeichnet, dass** zumindest eine der äusseren Öffnungen (5a, 6a, 7a) so realisiert ist, dass sie einen aus dem Ventil hervorstehenden Kanal bildet.

9. Magnetventil nach einem der vorangehenden Ansprüche, **dadurch gekennzeichnet, dass** es zumindest einen Dauermagneten (18) in Gestalt einer Scheibe oder eines Ringes umfasst, der konzentrisch oder parallel zur Achse des Ventils in dem von einer Spule (2) umgebenen mittleren Teil des feststehenden Kerns (1) platziert ist.

10. Magnetventil nach einem der vorangehenden Ansprüche, **dadurch gekennzeichnet, dass** die Befestigung des feststehenden Kerns (1) am Körper (4) durch Kleben, durch Stifte oder Klammern (16), die durch den Körper (4) und das Teil des feststehenden Kerns hindurchgehen, oder durch Klips (17) realisiert wird.

11. Magnetventil nach einem der Ansprüche 3 bis 6 oder 8 bis 10, **dadurch gekennzeichnet, dass** der Eintrittskanal (5) und der Druckablasskanal (7) so eingerichtet sind, dass eine pneumatische Verbindung zwischen Ventilen möglich ist, weil jeder der beiden Kanäle zwei normierte äussere Öffnungen auf zwei entgegengesetzten Seiten des Magnetventils umfasst.

12. Magnetventil nach dem vorangehenden Anspruch, **dadurch gekennzeichnet, dass** die elektrische Verbindung einer Gruppe von miteinander verbundenen Magnetventilen normiert und in den Körper (4) durch einen diesen Körper querenden, normierten Verbinder (14) integriert ist, wodurch es möglich wird, die elektrische Steuerung einer ganzen Gruppe von Magnetventilen auf einem einzigen Magnetventil zu konzentrieren.

13. Magnetventil nach einem der vorangehenden Ansprüche, **dadurch gekennzeichnet, dass** das einzige Teil des feststehenden Kerns (1) und/oder der Körper (4) Vorsprünge (13), Träger oder Öffnungen aufweisen, die geeignet sind, die gegenseitige Befestigung von Ventilen und/oder die Befestigung des Magnetventils auf einer pneumatischen Grundplatte (20) zu gewährleisten.

14. Magnetventil nach dem vorangehenden Anspruch, **dadurch gekennzeichnet, dass** die gegenseitige Befestigung von Ventilen und/oder die Befestigung auf einer pneumatischen Grundplatte (20) realisiert wird, indem Schrauben (21), Clips (22), Schienen (23), Bajonettsysteme (24) oder die pneumatischen Anschlüsse des Magnetventils verwendet werden.
